# DEMANDE DE BREVET EUROPEEN

(11) **EP 2 289 986 A2**
(43) Date de publication de la demande: **02.03.2011**
(21) Numéro de dépôt: 10305834.3
(22) Date de dépôt: 29.07.2010
(51) Int. Cl.: C08K 3/22, C08K 5/053, C08K 5/3492, C08G 69/40, C08K 13/02, C08K 5/00

(54) **Composition thermoplastique élastomère à base de polyéther bloc amides (PEBA) à résistance au feu améliorée, procédé de fabrication de ladite composition.**

(30) Priorité: 29.07.2009 FR 0955319
(71) Demandeur: Addiplast, 43600 Saint Pal de Mons (FR)
(72) Inventeur: Chantegraille, Denis, 43600, SAINTE SIGOLENE (FR)
(74) Mandataire: Denjean, Eric

(57) **Abrégé**

Composition thermoplastique élastomère présentant une excellente résistance au feu (classée V0 sous 1.6 mm selon la norme UL94 et 960°C/ 5 secondes au test au fil incandescent selon la norme CEI 60695/2/1) tout en garantissant de bonnes caractéristiques mécaniques. La dite invention est à base de PEBA et comprend, en tant qu'additifs anti feu, un mélange de cyanurate de mélamine, d'oxyde d'antimoine et de polyol comprenant au moins 4 fonctions alcool, **caractérisée en ce que :**
- le cyanurate de mélamine représente entre 12 et 20% en poids de la composition totale,
- le trioxyde d'antimoine représente entre 5 et 10% en poids de la composition totale,
- le polyol représente entre 5 et 10% en poids de la composition totale
et procédé de fabrication de ladite composition.
Utilisation de la composition pour la réalisation d'objets moulés ou extrudés

## Description

La présente invention a pour objet une composition thermoplastique élastomère à base de polyéther bloc amides (PEBA) à résistance au feu améliorée ainsi que son procédé de fabrication. De manière connue, la tenue au feu d'une composition thermoplastique élastomère s'apprécie d'une part par la résistance à la combustion et d'autre part par l'aptitude au gouttage.

Le polyéther bloc amide désigné PEBA est un élastomère thermoplastique de haute performance dont les séquences rigides sont constituées de polyamide et les séquences souples de polyéther. La structure générale est la suivante : HO-(CO-PA-CO-O-PE-O)n-H

Il est utilisé pour remplacer des élastomères comme les polyuréthanes, les élastomères de polyester et autre silicone. Ses caractéristiques principales sont : une densité faible, des propriétés mécaniques et physiques intéressantes (souplesse, résistance à l'impact, résistance à la fatigue), un maintien des propriétés à basse température (inférieure à -40 °C). Il est résistant à un large éventail de produits chimiques. Cependant, il nécessite d'être stabilisé car il est sensible à la dégradation aux ultra violets.

Le document EP758002A1 décrit des compositions thermoplastiques à base de résines polyamide à tenue au feu améliorée. Selon ce document, l'amélioration du comportement au feu est obtenue par ajout d'additifs ignifugeants tels que l'association d'oxyde d'antimoine (Sb₂O₃), de cyanurate de mélamine et de polyol comprenant au moins 4 fonctions alcool tel que par exemple le monopentaerythritol. L'exemple 29 décrit ainsi un mélange de PEBA (86% en poids de la composition), d'oxyde d'antimoine (Sb₂O₃) (2% en poids), de cyanurate de mélamine (10% en poids) et de monopentaerythritol (2% en poids). Le mélange maitre MM10, est constitué quant à lui de 40% en poids de PEBA, de 43% de cyanurate de mélamine, de 8.5% de trioxyde d'antimoine et de 8.5% de monopentaerythritol. Les exemples 53 à 58 testent l'UL94 et le IOL du mélange MM10 dilué jusqu'à une concentration de 30% dans différentes résines. Si les résultats montrent une amélioration de l'UL 94 lorsque le mélange maître est mélangé avec les résines PA12 et PA11, une telle amélioration n'est pas observée avec les résine PA-12 rigide + 30% FV, PEBA 1, PEBA 2 et PEBA 3. En d'autres termes, il ressort de ces résultats et notamment des exemples mettant en oeuvre PEBA1, PEBA2 et PEBA3 que l'augmentation d'additifs, si elle permet d'améliorer dans certains cas les valeurs IOL, n'améliore pas pour autant l'UL94.PAr ailleurs, les exemples 59 à 62 ne contiennent pas de résultats relatifs au classement au feu.

Le problème que se propose de résoudre l'invention est de mettre au point des compositions thermoplastiques à base de PEBA présentant une excellente résistance au feu, en particulier des compositions classées V0 sous 1.6 mm selon la norme UL94 et 960°C/ 5 secondes sous 2 mm au test au fil incandescent selon la norme CEI 60695/2/1, tout en ayant des caractéristiques mécaniques améliorées par rapport aux compositions de l'art antérieur.

Le Demandeur à découvert que de manière surprenante, l'objectif ci-dessus était atteint en combinant des agents d'ignifugation non halogénés et en sélectionnant des fourchettes spécifiques de concentration de cyanurate de mélamine, d'oxyde d'antimoine et de polyol et en les mélangeant selon un processus particulier.

Plus précisément, l'invention a pour objet une composition thermoplastique élastomère à base de PEBA comprenant, en tant qu'additifs anti feu, un mélange de cyanurate de mélamine, d'oxyde d'antimoine et de polyol comprenant au moins 4 fonctions alcool.

Les différentes compositions peuvent contenir divers additifs par exemple des plastifiants, des stabilisants ou antioxydants destinés à protéger la phase polymère PEBA contre la thermo oxydation ou la photooxydation, des additifs de mise en oeuvre tels que des lubrifiants, des colorants ou des pigments etc..

La composition se **caractérise en ce que :**
- le cyanurate de mélamine représente entre 12 et 20%, avantageusement entre 14 et 19% en poids de la composition totale,
- le trioxyde d'antimoine représente entre 5 et 10%, avantageusement entre 6 et 9% en poids de la composition totale,
- le polyol représente entre 5 et 10%, avantageusement entre 6 et 9% en poids de la composition totale.

L'invention couvre la mise en oeuvre de la composition thermoplastique décrite ci-dessus par extrusion compoundage et couvre l'utilisation desdites compositions pour la mise en forme de pièces industrielles par différents procédés tel que l'injection (basse ou haute pression), l'extrusion (profilés, câble, films calandrage, soufflage, gonflage ou autre..), thermoformage, prototypage, rotomoulage ....

Les compositions de l'invention présentent comme déjà dit une excellente résistance au feu (classés V0 sous 1.6 mm selon la norme UL94 et 960°C/ 5 secondes sous 2 mm au test au fil incandescent selon la norme CEI 60695/2/1) tout en garantissant de bonnes caractéristiques mécaniques. Elles peuvent être utilisées en tant que compounds, c'est à dire produit en tant que tel, ou sous forme de masterbatch c'est à dire à diluer dans une autre matrice polymère thermoplastique.

Selon une caractéristique essentielle, la résine à base de polyamide est un polyéther bloc amide (PEBA). De tels produits sont ceux par exemples commercialisés sous la marque PEBAX (marque déposée par ARKEMA). Les différents grades utilisés sont classés selon leurs duretés Shore D croissantes (entre 25 et 55) définies selon la norme ISO 868. Il s'agit par exemple des PEBAX 25R53 , 35R53 , 40R53, 55R53 (où R définit un matériau en partie issu de ressources renouvelables) et les grades 2533, 3533, 4033 et 5533. Ces grades peuvent être référencés SP01 lorsqu'ils sont stabilisés UV, et SA01 dans le cas contraire. Tout PEBA de composition équivalente aux PEBAX définis ci-avant est également couvert par l'invention.

Dans un mode de réalisation avantageux, le polyéther bloc amide utilisé comme base polymère est choisi dans le groupe comprenant les PEBA du type PEBAX 25R53 ou du type 2533 ou équivalents et les PEBA du type PEBAX 5533 ou du type 55R53 ou équivalents.

Les PEBA du type PEBAX 25R53 ou du type 2533 ou équivalents sont des PEBA présentant une température de fusion de 136°C et une dureté shore D de 25 ou 26 et contenant 80% en poids de séquences polyether souples choisies dans le groupe comprenant le PTMG (polytétraméthylène glycol), le PEG (polyéthylène glycol), le PTMO (polytétraméthylèneoxide) ou le PEO (polyéthylèneoxide) et 20% en poids de séquences polyamide rigides choisies dans le groupe comprenant le PA12, le PA6 ou le PA11.

Les PEBA type PEBAX 5533 ou du type 55R53 ou équivalents sont des PEBA présentant une température de fusion de 159°C et une dureté shore D de 54 ou 55 et contenant 33% en poids de séquences polyether souples choisies dans le groupe comprenant le PTMG (polytétraméthylène glycol), le PEG (polyéthylène glycol), le PTMO (polytétraméthylèneoxide) ou le PEO (polyéthylèneoxide) et 66% en poids de séquences polyamide rigides choisies dans le groupe comprenant le PA12, le PA6 ou le PA11.
Selon l'invention, la composition thermoplastique à base de PEBA contient un système d'ignifugation non halogéné constitué de Sb₂O₃ (trioxyde d'antimoine), de cyanurate de mélamine, et d'au moins un polyol contenant au moins quatre fois la fonction alcool.

Ces trois additifs représentent en pratique entre 20 à 40 %, avantageusement entre 28 et 36% en poids du poids total de la composition.

En fonction de la nature du PEBA choisi, certaines compositions peuvent contenir des agents stabilisants représentant au plus, 2% en poids de la composition totale.

Le trioxyde d'antimoine se présente en général sous forme de poudre fine dont la granulométrie moyenne est de l'ordre du µm.

Le cyanurate de mélamine résulte de l'action de la mélamine sur l'acide cyanurique. Plus précisément, il résulte de la réaction équimolaire de la mélamine sur l'acide cyanurique, ce dernier pouvant être sous la forme énolique ou cétonique.

Le polyol contient au moins quatre fois la fonction alcool tels que les tétrols comme l'érythrol, le monopentaérythritol (PER), et ses dérivés polysubstitués, les pentols tels que le xylitol, l'arabitol, et les hexols tels que le mannitol, le sorbitol et ses homologues supérieurs.

L'invention concerne également le procédé de fabrication de la composition ci-avant décrite et qui consiste, pour l'essentiel, à introduire tout d'abord dans une extrudeuse double vis corotative, le PEBA et le trioxyde d'antimoine, puis un mélange de cyanurate de mélamine et de polyol.

L'extrusion est conduite à une température augmentant progressivement entre 200°C et 240°C, de préférence de 210°C et 230°C.

L'invention a enfin pour objet l'utilisation de la composition thermoplastique élastomère décrite ci-avant, seule ou en mélange avec d'autres polymères, pour la réalisation d'objets moulés ou extrudés, de films, de fibres et de matériaux composites et notamment pour la réalisation d'éléments dans le domaine des transports (automobiles, ferroviaires..), dans le domaine du câble, des ordinateurs (fixe, laptop etc..) et du software.

L'invention et les avantages qui en découlent ressortent bien des exemples de réalisation suivants.

### 1-Formulation générale.

Le thermoplastique élastomère utilisé est un polyéther bloc amide de type PEBAX
Le système d'ignifugation présente 3 additifs principaux, tous sont non halogénés.
La cyanurate de mélamine (MC) utilisé est le MC50 de la société CIBA spécialités chimiques.
Le polyol est le monopentaérythritol (monoPER) CHARMOR PM15 et/ou dipentaerythritol (diPER) CHARMOR DP40 de la société PERSTOP.
Le trioxyde d'antimoine (Sb₂O₃) utilisé est le CAMPINE N de la société CAMPINE.

Les exemples suivants illustrent l'invention sans la limiter.

| | Polyéther bloc amide en complément de la formule | Sb₂O₃ en % | MC ou MC₅₀ en % | MonoPER ou CHARMOR PM15 en % | DiPER ou CHARMOR DP 40 en % |
|---|---|---|---|---|---|
| Exemple 1 | Du type Pebax 25R53 ou 2533 ou équivalents | 8 | 17 | 8 | 0 |
| Exemple 2 | Du type Pebax 55R53 ou 5533 ou équivalents | 7 | 15 | 0 | 7 |

### 2/ Procédé de fabrication

On introduit dans une extrudeuse double vis corotative, le PEBA et le trioxyde d'antimoine, puis un mélange contenant le cyanurate de mélamine et le polyol.
Température d'extrusion : de Z2 à Z10 : 220°C, et Z11 :230°C pour l'exemple 1
de Z2 à Z10 : 210°C, et Z11 :220°C pour l'exemple 2.

Rotation vis : 400 tours/min pour la formulation n° 1.
200 tours/min pour la formulation n° 2.

Débit : 20 Kg/h
Pression : 25 bars.

Toutes éprouvettes ou échantillons nécessaires à la caractérisation des formulations décrites ci-dessus, ont été mis en oeuvre par injection par le biais d'une presse à injecter.
Température d'injection : 210 + ou - 10°C.
Température moule : 30°C.

### 3/ Résultats

Les paramètres suivants sont étudiés :
- UL 94 selon norme UL94.
- Fil incandescent selon CEI 60695/2/1.
- ILO selon la norme ISO 4589.
- Dureté shore D selon la norme ISO 868.
- Allongement selon la norme ISO R527.
- Choc Izod entaillé selon la norme ISO 180/lA.
- Densité selon la norme ISO 1183/A.

L'ensemble des valeurs des paramètres mesurés sur les compositions des exemples 1 et 2 en font des compositions uniques comme il résulte des résultats suivants :

### Exemple 1

- UL 94, V0 sous 1.6 mm selon norme UL94.
- 960°C/5 secondes au fil incandescent selon CEI 60695/2/1.
- ILO égal à 28 selon la norme ISO 4589.
- Dureté shore D égale à 31 selon la norme ISO 868.
- Allongement supérieur à 650 % selon la norme ISO R527.
- Choc Izod entaillé : ne casse pas selon la norme ISO 180/lA.
- Densité égale à 1,16 g/ cm³ selon la norme ISO 1183/A.

### Exemple 2

- UL 94, V0 sous 1.6 mm selon norme UL94.
- 960°C/5 secondes au fil incandescent selon CEI 60695/2/1.
- ILO égal à 31 selon la norme ISO 4589.
- Dureté shore D égale à 62 selon la norme ISO 868.
- Allongement égal à 350 % selon la norme ISO R527.
- Choc Izod entaillé : ne casse pas selon la norme ISO 180/lA.
- Densité égale à 1,15 g/ cm³ selon la norme ISO 1183/A.

## Revendications

1. Composition thermoplastique élastomère à base de PEBA comprenant, en tant qu'additifs anti feu, un mélange de cyanurate de mélamine, de trioxyde d'antimoine et d'un polyol comprenant au moins 4 fonctions alcool, **caractérisée e :**
- le cyanurate de mélamine représente entre 12 et 20% en poids de la composition totale,
- le trioxyde d'antimoine représente entre 5 et 10% en poids de la composition totale,
- le polyol représente entre 5 et 10% en poids de la composition totale.

2. Composition selon la revendication 1, **caractérisée en ce que :**
- le cyanurate de mélamine représente entre 14 et 19% en poids de la composition totale,
- l'oxyde d'antimoine représente entre 6 et 9% en poids de la composition totale,
- le polyol représente entre 6 et 9% en poids de la composition totale.

3. Composition selon la revendication 1, **caractérisée en ce que** le PEBA présente une température de fusion de 136°C et une dureté shore D de 25 ou 26 et contient 80% en poids de séquences polyether souples choisies dans le groupe comprenant le PTMG (polytétraméthylène glycol), le PEG (polyéthylène glycol), le PTMO (polytétraméthylèneoxide) ou le PEO (polyéthylèneoxide) et 20% en poids de séquences polyamide rigides choisies dans le groupe comprenant le PA12, le PA6 ou le PA11.

4. Composition selon la revendication 1, **caractérisée en ce que** le PEBA présente une température de fusion de 159°C et une dureté shore D de 54 ou 55 et contient 33% en poids de séquences polyether souples choisies dans le groupe comprenant le PTMG (polytétraméthylène glycol), le PEG (polyéthylène glycol), le PTMO (polytétraméthylèneoxide) ou le PEO (polyéthylèneoxide) et 66% en poids de séquences polyamide rigides choisies dans le groupe comprenant le PA12, le PA6 ou le PA11.

5. Composition selon la revendication 1, **caractérisée en ce que** le polyol est choisi dans le groupe comprenant les tétrols comme l'érythrol, le monopentaérythritol (PER), et ses dérivés polysubstitués, les pentols tels que le xylitol, l'arabitol, et les hexols tels que le mannitol, le sorbitol et ses homologues supérieurs.

6. Composition selon la revendication 1, **caractérisée en ce que** le polyol est choisi dans le groupe comprenant le monopentaérythritol et le dipentaérythritol.

7. Composition selon la revendication 1, **caractérisée en ce que** les additifs anti-feu représentent entre 20 à 40 %, avantageusement entre 28 et 36% en poids du poids total de la composition.

8. Procédé de fabrication de la composition objet de l'une des revendications 1 à 6, consistant à introduire dans une extrudeuse double vis corotative, le PEBA et le trioxyde d'antimoine, puis un mélange de cyanurate de mélamine et de polyol.

9. Procédé selon la revendication 7, **caractérisé en ce que** l'extrusion est conduite à une température augmentant progressivement entre 200°C et 240°C, de préférence de 210°C à 230°C.

10. Utilisation de la composition thermoplastique élastomère selon l'une des revendications 1 à 7 seule ou en mélange avec d'autres polymères, pour la réalisation d'objets moulés ou extrudés, de films, de fibres et de matériaux composites.
